# EUROPÄISCHE PATENTSCHRIFT

(11) **EP 1 352 326 B1**
(45) Veröffentlichungstag und Bekanntmachung des Hinweises auf die Patenterteilung: **11.11.2009**
(21) Anmeldenummer: 01995571.5
(22) Anmeldetag: 05.12.2001
(51) Int. Cl.: G06F 11/30

(54) **VERFAHREN UND VORRICHTUNG ZUR ÜBERWACHUNG EINER DATENVERARBEITUNG UND -ÜBERTRAGUNG**
METHOD AND DEVICE FOR MONITORING A DATA PROCESSING AND TRANSMISSION
PROCEDE ET DISPOSITIF DE SURVEILLANCE D'UN TRAITEMENT ET D'UNE TRANSMISSION DE DONNEES

(30) Priorität: 19.12.2000 DE 10063350
(43) Veröffentlichungstag der Anmeldung: 15.10.2003
(73) Patentinhaber: SIEMENS AKTIENGESELLSCHAFT, 80333 München (DE)
(72) Erfinder: BARTHEL, Herbert, 91074 Herzogenaurach (DE); BREU, Klaus, 92265 Edelsfeld (DE); FUCHS, Heiner, 91056 Erlangen (DE); SCHENK, Andreas, 91052 Erlangen (DE); SCHÜTZ, Hartmut, 91336 Heroldsbach (DE); WALTER, Markus, 96050 Bamberg (DE)
(86) Internationale Anmeldenummer: PCT/DE2001/004559
(87) Internationale Veröffentlichungsnummer: WO 2002/050637

(56) Entgegenhaltungen:
- EP-A- 0 606 803
- EP-A- 0 615 188
- EP-A- 1 063 591

## Beschreibung

Die Erfindung betrifft ein Verfahren und eine Vorrichtung zur Überwachung einer Datenverarbeitung und -übertragung in einer Datenverarbeitungseinheit, z.B. in einem Automatisierungssystem, in einer speicherprogrammierbaren Steuerung oder in einem Personalcomputer.

Üblicherweise werden Datenverarbeitungseinheiten entsprechend ihrer Anwendung in sicherheitsrelevante, so genannte "Fail-safe"-Systeme, und nicht sicherheitsrelevante Systeme unterschieden. Allgemeines Ziel bei "sicheren Computersystemen" oder so genannten "Failsafe"- Systemen ist, dass Daten aktuell und nicht verfälscht bearbeitet werden. Bei einer Kommunikation, d.h. einem Austausch von Daten zwischen Software-Modulen einer einzelnen Datenverarbeitungseinheit oder zwischen verschiedenen Datenverarbeitungseinheiten, wird insbesondere auf ein rechtzeitiges Eintreffen der Daten sowie auf eine richtige Datenreihenfolge geachtet. Das rechtzeitige Eintreffen der Daten kann beispielsweise dadurch überprüft werden, dass im Falle einer Datenkommunikation ein eintreffendes Datensignal durch Rücksendung einer so genannten "Quittung" an den Sender des Datensignals bestätigt wird.

Zur Überprüfung, ob bei der Datenübertragung möglicherweise ein Fehler aufgetreten ist, wird einem Datenpaket üblicherweise eine Prüfsumme zugeordnet und mit diesem übertragen. Dabei kann es sich beispielsweise um ein so genanntes CRC ("Cyclic Redundancy Check") handeln, bei dem es sich um ein Prüfsignal handelt, das durch einen Verschlüsselungscode auf Basis eines Polynoms erzeugt wurde.

Darüber hinaus kann eine einzelne Datenverarbeitungseinheit "sichere" und "nicht sichere" Software-Module bzw. ein Computersystem "sichere" Baugruppen unter Zwischenschaltung einer "nicht sicheren" Baugruppe umfassen. Das "nicht sichere" Software-Modul oder die "nicht sichere" Baugruppe weist dabei so genannte "firmware" auf, beispielsweise ein herstellerspezifisches Betriebssystem und/oder ein Anwenderprogramm. Diese "firmware" weist dabei hinsichtlich ihrer Zuverlässigkeit und/oder Verfügbarkeit nicht eine die Sicherheitsanforderungen der betreffenden Datenverarbeitungseinheit bzw. des betreffenden Computersystems entsprechende Zertifizierung auf. Daher kann bei besonders hohen Sicherheitsanforderungen auch nach bereits erfolgter Sicherheitszertifizierung bei einer Produktänderung eine daraus resultierende Soft- und/oder Hardware-Änderung wieder zu zertifizieren sein, was zu einer Begrenzung der Verfügbarkeit der Datenverarbeitungseinheit bzw. des gesamten Computersystems führen kann. Darüber hinaus sind derartige erneute Zertifizierungen besonders zeit- und kostenintensiv.

Aus der DE 694 06 571 T2 ist bekannt, ein Verfahren zur Kontrolle der korrekten Ausführung eines Multitask-Rechnerprogramms durch mindestens einen Prozessor, in dem die Aufgaben des Programms Nachrichten aussenden und unter Berücksichtigung solcher Nachrichten ausgeführt werden, wobei jede Nachricht eine Zeitmarke enthält und jede eine Nachricht aussendende Aufgabe einen dieser Nachricht zugeordneten Ausführungsschlüssel erarbeitet, der eine kausale Abhängigkeitsbeziehung der Nachricht identifiziert, welche durch die chronologische Abfolge der Ausführung der Aufgaben und die chronologische Abfolge der Berücksichtigung der Nachrichten durch diese Aufgaben definiert ist, die zur Aussendung dieser Nachricht durch diese aussendende Aufgabe geführt haben, dadurch gekennzeichnet, daß jeder Ausführungsschlüssel (durch eine Exklusiv-ODER-Verknüpfung Bit für Bit von Binärwörtern gebildet wird, die je die binäre Repräsentation einer Aufgabenidentifikation oder einer Nachrichtenidentifikation oder einer Nachrichten-Zeitmarke enthalten, wobei die Bits jedes Binärworts vorher zyklisch mit unterschiedlichen Anfängen für jedes Wort permutiert wurden, und wobei mindestens eine der Aufgaben eine oder mehrere solcher Nachrichten als Antwort auf die Berücksichtigung mindestens einer Eingangsnachricht aussendet und ein Vergleich zwischen dem an letzter Stelle durch eine Aufgabe des Programms erarbeiteten Ausführungsschlüssel und einem ausgehend von der Eingangsnachricht erarbeiteten Bezugsschlüssel erfolgt, der eine Erfassung eines Ausführungsfehlers erlaubt.

Der Erfindung liegt die Aufgabe zugrunde, ein Verfahren zur Überwachung der Datenverarbeitung und in einer Datenverarbeitungseinheit anzugeben, mit der die Arbeitsweise von "nicht sicheren" Software-Modulen und/oder Baugruppen besonders einfach und sicher überprüft werden kann.

Diese Aufgabe wird erfingdungsgemäß gelöst durch ein Verfahren wie in Anspruch 1 und eine Vorrichtung wie in Anspruch 6 definiert.

Die Erfindung geht dabei von der Überlegung aus, dass eine besonders einfache Überprüfung der Funktionsfähigkeit von Software-Modulen oder Baugruppen erfolgen kann, indem eine geeignete, diese Funktionsfähigkeit charakterisierende Information mit übermittelt wird. Dies ist auf besonders günstige und ressourcensparende Weise möglich, indem ein ohnehin zu übertragendes Informationselement dazu mitverwendet wird. Hierzu ist die ohnehin zu übertragende Prüfsumme vorgesehen, die zur Mitübertragung der die Funktionsfähigkeit charakterisierenden Informationen geeignet modifiziert ist.

Das Kriterium eines ordnungsgemäßen Durchlaufs der Daten durch die ausgewählten, auf Funktionsfähigkeit zu überwachenden Software-Module kann dabei geeignet und abhängig von der Einsatzart des Software-Moduls vorgegeben sein. Beispielsweise könnte ein ordnungsgemäßer Durchlauf der Daten bereits festgestellt werden, wenn bei Eintreffen der Daten beim zu überwachenden Software-Modul festgestellt wird, dass dieses aktiv ist und die Daten rechtzeitig innerhalb einer vorgebbaren Aktionszeit weiterschickt. Alternativ oder zusätzlich könnte das Kriterium eines ordnungsgemäßen Durchlaufs aber auch vom Vorliegen weiterer, beispielsweise externer, Bedingungen wie beispielsweise dem rechtzeitigen Eintreffen eines Signals eines vorgeschalteten Software-Moduls abhängig gemacht sein.

Um dabei einen Informationsverlust in der Prüfsumme sicher zu vermeiden, werden vorteilhafterweise die beim Verschieben aus der für die Prüfsumme verfügbaren Wortlänge herausfallenden Informationselemente in der Art einer Rotation am entgegengesetzten Ende wieder eingefügt.

Durch eine derartige Änderung einer Sicherungsinformation in Form einer modifizierten Prüfsumme ist ein Online-Nachweis über die Aktivität oder die Ausführung, d.h. über die Datenverarbeitung, des betreffenden Software-Moduls gegeben. Dabei wird innerhalb derjenigen Software-Module, deren Aktivzeit fortlaufend überprüft werden soll, ein reversibler Eingriff in die Prüfsumme vorgenommen. Nach dem Eintreffen der derartig modifizierten Prüfsumme beim Empfänger werden dort die reversiblen Eingriffe, entsprechend der Soll-Zahl der aktiven Software-Module, wieder rückgängig gemacht. In der modifizierten Prüfsumme liegen dabei komprimiert Informationen über die Gesamtheit aller ordnungsgemäß durchlaufenden Software-Module vor, so dass durch einen geeigneten Vergleich mit einem Erwartungswert oder Sollzustand zuverlässig erkennbar ist, ob alle Software-Module fehlerfrei gearbeitet haben. Eine nicht korrekte Ausführung oder eine nicht korrekte Datenübertragung und in besonderem Maße ein Ausfall der Datenverarbeitung würde empfangsseitig durch eine verfälschte Sicherungsinformation - nämlich eine nicht ausreichend modifizierte Prüfsumme - identifiziert werden. Eine derartige Modifikation der Prüfsumme durch Verschieben oder Rotation einer vorgebbaren Anzahl von Stellen ermöglicht darüber hinaus vorzugsweise eine Differenzierung der in der Datenverarbeitungseinheit vorhandenen ausgewählten Software-Modulen nach aktiven und nicht aktiven Software-Modulen oder Baugruppen.

Zweckmäßigerweise wird empfangsseitig anhand der empfangenen Daten die Prüfsumme erneut bestimmt und die empfangene modifizierte Prüfsumme um die Anzahl der sendeseitig erwarteten aktiven ausgewählten Software-Module invers verschoben, wobei eine daraus resultierende invers modifizierte Prüfsumme mit der aus den empfangenen Daten ermittelten Prüfsumme verglichen wird. Alternativ oder zusätzlich wird eine weitere Prüfsumme ebenfalls mit den Daten ausgetauscht und als Grundlage für den Vergleich herangezogen. Dies ermöglicht eine mehrfach redundante Sicherungsinformation zum Nachweis der Ausführung der Datenverarbeitung in Form der übermittelten ursprünglichen Prüfsumme, der erneut anhand der übermittelten Daten berechneten Prüfsumme, der modifizierten Prüfsumme und deren inversen Bearbeitung sowie Vergleich mit der ursprünglichen Prüfsumme.

Bevorzugt werden in vernetzten Computersystemen die Daten zwischen Software-Modulen verschiedener Datenverarbeitungseinheiten ausgetauscht, wobei die zu modifizierende Prüfsumme in der sendenden Datenverarbeitungseinheit gebildet wird. Die Prüfsumme wird dann in der genannten Art beim Durchlauf durch die ausgewählten Software-Module in der empfangenden Datenverarbeitungseinheit invers modifiziert. Hierdurch ist eine Information zur Erkennung von Fehlern bei der Datenübertragung mehrerer miteinander wechselwirkenden Datenverarbeitungseinheiten sowie bei der dabei zugrundeliegenden Datenverarbeitung gegeben. Je nach Art und Ausführung des vernetzten Computersystems - Baum-Topologie oder Sternstruktur - wird die Art der Modifikation der Prüfsumme bevorzugt erweitert durch n-fache Operationen. Bei einem Datenaustausch über n-Instanzen wird dabei beispielsweise im Sender die Operation n-fach ausgeführt, jede Instanz führt zur Weiterleitung die inverse Operation einmal aus. Somit wird beim letzten Empfänger wieder die ursprüngliche Sicherungsinformation in Form der ursprünglich ermittelten Prüfsumme empfangen. Alternativ oder zusätzlich können weitere mathematische Operationen, z.B. n-fache Potenzierung der Prüfsumme, als Modifikation der Prüfsumme verwendet werden.

Vorteilhafterweise sind als Software-Module, in denen zum Nachweis ihrer Funktionsfähigkeit oder Verfügbarkeit eine Verschiebung oder reversible Modifikation der Prüfsumme erfolgt, so genannte Prüfprogramme der betreffenden Datenverarbeitungseinheit ausgewählt. Jeweils zwei dieser Prüfprogramme können dabei in der Art einer Einbettung oder Kapselung ein "nicht sicheres" Software-Modul umgeben und fortlaufend auf ordnungsgemäßen Betrieb überwachen, beispielsweise mittels einer Laufzeitüberwachung. Die als ausgewählte Software-Module vorgegebenen Prüfprogramme werden dabei ihrerseits fortlaufend anhand der Prüfsumme auf Verfügbarkeit und Aktivität überwacht, so dass indirekt aus dem Ausbleiben von Fehlermeldungen auf dem sicheren und zuverlässigen Betrieb der eingebetteten Sofware-Module geschlossen werden kann.

Dabei wird bei einer Veränderung oder Anpassung einer Datenverarbeitungseinheit durch zwischengeschaltete "nicht sichere" Software-Module und/oder "nicht sichere" Baugruppen einen einer Zertifizierung entsprechenden Sicherheitsstandard gewährleistende Überprüfung der Datenverarbeitung und/oder -übertragung ermöglicht, indem die nicht sicheren Software-Module bzw. Baugruppen in sichere Programmabschnitte - in das Prüfprogramm (= ein so genanntes Fail-Safe-Programm) - integriert werden.

Dieses Fail-Safe-Programm, das einzelne oder mehrere Software-Module, z.B. neue firmware oder Anwendungssoftware, bzw. Baugruppen, z.B. neue Ein-/Ausgabebaugruppen, einbettet, wird dabei hinsichtlich Aktivität und Verfügbarkeit überprüft. Mit anderen Worten: Hierbei liegt der Gedanke zugrunde, dass beispielsweise ein verläßlicher Betrieb der firmware - und somit eine in der Art einer allgemeinen Zertifizierung vorgesehene Abnahme von nicht sicheren Software-Modulen und/oder Baugruppen - dauernd nachweisbar ist, wenn andauernd gezeigt werden kann, dass das die firmware überwachende Fail-Safe-Programm vorhanden und auch aktiv ist. Dabei wird die Prüfsumme in jedem die firm-ware absichernden Fail-Safe-Programm um eine Stelle verschoben (= rotiert; hierbei ist eine Rotation nach rechts vorgesehen). Somit ist die Prüfsumme nach Verlassen des die firm-ware absichernden Fail-Safe-Programmes um eine Anzahl von N Stellen verschoben oder rotiert worden, die der Anzahl der vorhandenen oder aktiven Fail-Safe-Programme entspricht. Beim Eintreffen der so modifizierten Prüfsumme im nachgeschalteten, abgesicherten Programmteil wird die Prüfsumme in Gegenrichtung der ursprünglichen Verschiebung oder Rotation um die Anzahl der erwarteten Fail-Safe-Programme verschoben bzw. rotiert. Wenn sich dabei eine Übereinstimmung mit der aus den empfangenen Nutzdaten ermittelten Prüfsumme einstellt, ist ein Nachweis dafür gegeben, dass sämtliche vorgesehenen und erforderlichen Fail-Safe-Programme auch aktiv sind. In diesem Fall ist somit von einer ordnungsgemäßen Funktionsweise der eingebetteten firmware auszugehen.

Vorzugsweise wird für die Datenübertragung zwischen Software-Modulen bzw. Datenverarbeitungseinheiten und/oder die Datenverarbeitung in einem Software-Modul bzw. einer Datenverarbeitungseinheit eine Laufzeit ermittelt und mit einem vorgegebenen Wert verglichen. Die Ermittlung der Laufzeit kann dabei mittels einer Quittung erfolgen. Die Überwachung einer derartigen Programmlaufzeit bzw. Datenlaufzeit als Fehlerparameter ermöglicht eine einer Zertifizierung weitgehend entsprechende Sicherung. Dabei wird ein Systemfehler daran erkannt, dass bei Abarbeitung eines Software-Moduls oder der firmware eine Zeitvorgabe überschritten wird. Dabei liegt das Konzept zugrunde, dass durch das das Software-Modul ummantelnde Prüf- oder Fail-Safe-Programm eine Zeitverzögerung im kritischen Programmteil oder im "nicht sicheren" Software-Modul detektierbar ist, so dass ein die Datenverarbeitung charakterisierendes Problem sofort erkannt wird.

Die mit der Erfindung erzielten Vorteile bestehen insbesondere darin, dass durch Modifikation und anschließender inversen Bearbeitung einer vorhandenen Prüfsumme eine Sicherungsinformation sowohl zur Erkennung von Fehlern bei einer Datenverarbeitung als auch zur Erkennung von Fehlern bei einer Übertragung gewonnen werden kann. Dies kann indirekt dadurch erfolgen, dass fortlaufend anhand der Modifikation der Prüfsumme auf besonders einfache und ressourcenschonende Weise die Aktivität von Sicherungs- oder Prüfprogrammen überwacht wird. Insbesondere ist gewährleistet, dass die Verfügbarkeit von "nicht sicheren" Software-Modulen bzw. Baugruppen überwacht wird. Zusätzlich kann eine Störung in der Datenverarbeitung bzw. -übertragung unmittelbar spätestens nach Ablauf einer vorgegebenen Laufzeit identifiziert werden.

Ausführungsbeispiele der Erfindung werden anhand einer Zeichnung näher erläutert. Darin zeigen:
- Fig 1: schematisch eine Datenverarbeitungseinheit mit mehreren Software-Modulen und das diese umgebende Prüfprogramm,
- Fig 2: schematisch das Prüfprogramm, und
- Fig 3: schematisch mehrere miteinander kommunizierende Datenverarbeitungseinheiten gemäß Figur 1.

Einander entsprechende Teile sind in allen Figuren mit den gleichen Bezugszeichen versehen.

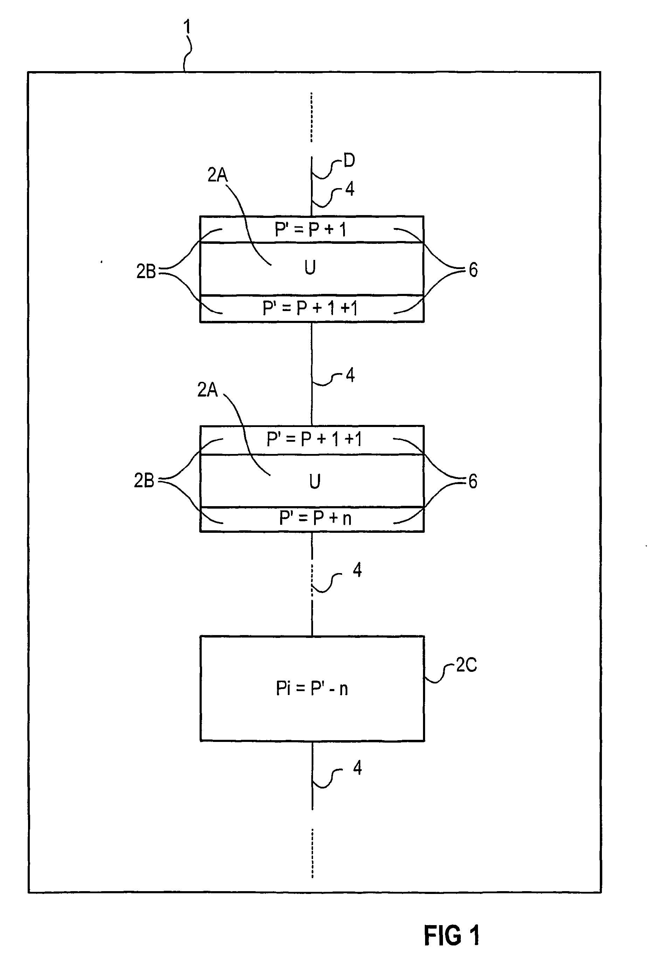

Figur 1 zeigt eine Datenverarbeitungseinheit 1 mit mehreren Software-Modulen 2A und 2B, die einen der Datenverarbeitungseinheit 1 zugrundeliegenden Programmablauf beschreiben. Die Software-Module 2A und 2B unterscheiden sich durch ihre Funktion, insbesondere Sicherheitsfunktion, und/oder die Art ihrer Zertifizierung. In der Figur 1 sind zwei nicht sichere Software-Module 2A und vier sichere Software-Module 2B dargestellt. Die nicht sicheren Software-Module 2A sind Software-Programme, die nach einer Zertifizierung oder Abnahme der Datenverarbeitungseinheit 1 geändert wurden. Die Software-Module 2B sind Software-Programme, die seit deren Inbetriebnahme und Zertifizierung unverändert sind. Die Software-Module 2B sind dabei als Prüfprogramme für die Software-Module 2A ausgebildet, wobei in der Art einer Einbettung oder Kapselung jedem Software-Modul 2A jeweils zwei Software-Module 2B zugeordnet sind, die dieses datenflußmäßig umschließen.

Bei einer Datenverarbeitung werden zwischen den Software-Modulen 2A und 2B auf logischen Kanälen 4 (keine hardwaremäßigen Übertragungseinheiten) Daten D ausgetauscht, die je nach Art der Verknüpfung sowie der Funktionalität der zugrundeliegenden Software einseitig bzw. zweiseitig ausgetauscht werden.

Zur Prüfung des Programmlaufs (=Datenverarbeitung) und/oder des Datenflusses (=Datenübertragung), insbesondere der nicht sicheren Software-Module 2A, der Datenverarbeitungseinheit 1 sind die ein jeweils die Software der nicht sicheren Software-Module 2A umschließenden Software-Module 2B jeweils als Prüfprogramm 6 ausgebildet. Die das Prüfprogramm 6 für ein Software-Modul 2A bildenden Software-Module 2B überprüfen dabei fortlaufend den ordnungsgemäßen Betrieb oder die Verfügbarkeit des jeweiligen Software-Moduls 2A. Dies kann beispielsweise über eine Laufzeitmessung erfolgen, bei der dann auf eine ordnungsgemäße Verfügbarkeit des Software-Moduls 2A geschlossen wird, wenn ein von ihm in Datenflußrichtung vorgeschalteten Software-Modul 2B erzeugtes Signal innerhalb einer vorgegebenen Grenzzeit im ihm nachgeschalteten Software-Modul 2B eintrifft. Die Aktivität und dauernde Verfügbarkeit der für die Absicherung ausgewählten Software-Module 2B wird dabei ihrerseits fortlaufend überprüft, indem in jedem ausgewählten Software-Modulen 2B beim ordnungsgemäßen Durchlauf der Daten D eine diesen zugeordnete Prüfsumme P in der Art einer reversiblen Modifikation um eine dem jeweiligen Software-Modul 2B zugeordnete Anzahl von Stellen n verschoben, insbesondere rotiert, wird.

In Figur 1 wird beispielhaft bei einem nicht sicheren Software-Modul 2SA ein Telegramm mit Daten D eines anderen Software-Moduls 2A bzw. 2B empfangen. Den Daten D wird empfangsseitig im zugehörigen Prüfprogramm 6 des Software-Moduls 2A eine Prüfsumme P zugeordnet, die bei ordnungsgemäßem Durchlauf durch das ausgewählte Software-Modul 2B wie folgt modifiziert wird: P'=P+1. Ein "ordnungsgemäßer Durchlauf" wird dabei anhand eines vorgebbaren Kriteriums festgestellt, anhand dessen zuverlässig auf die Aktivität des jeweiligen ausgewählten Software-Moduls geschlossen werden kann. Dabei kann es sich beispielsweise um ein Laufzeitkriterium handeln. Zur Modifikation der Prüfsumme wird die aus den Daten D ermittelte Prüfsumme P um eine Stelle nach links oder rechts verschoben. In diesem Fall ist somit sämtlichen ausgewählten Software-Modulen 2B eine "1" als Anzahl von Stellen zugeordnet. Die Software des betreffenden Software-Moduls 2A wird anhand der Daten D verarbeitet. Nach Ablauf der Software und somit der Datenverarbeitung wird die modifizierte Prüfsumme P' nochmals um eine einzelne Stelle n verschoben, falls auch in dem Software-Modul 2A datenflußmäßig nach geschalteten ausgewählten Software-Modul eine ordnungsgemäße Datenverarbeitung festgestellt wird. Im Ausführungsbeispiel wird somit zur Bildung der modifizierten Prüfsumme P' die Prüfsumme P bei Durchlauf der Daten durch das in Datenflußrichtung gesehen erste Software-Modul 2A und die diese umgebenden ausgewählten Software-Module 2B in Summe um 2 Stellen verschoben gemäß P"=P+1+1. Durch eine derartige Modifizierung der Prüfsumme P anhand der verarbeiteten Software ist einerseits somit auch die Verfügbarkeit der ausgewählten Software-Module 2B ein Nachweis für eine korrekte Datenverarbeitung im Software-Modul 2A sowie andererseits für die Verfügbarkeit der ausgewählten Software-Module 2B als solche gegeben.

Eine entsprechende Modifikation der Prüfsumme P findet im in Datenflußrichtung gesehen zweiten Software-Modul 2A und den diesem zugeordneten ausgewählten Software-Modulen 2B statt.

Je nach Art und Ausführung wird die modifizierte Prüfsumme P' in einem nachgeschalteten, bevorzugt sicheren Software-Modul 2C, auf Richtigkeit überprüft. Dazu wird die modifizierte Prüfsumme P' um die Anzahl der als aktiv erwarteten ausgewählten Software-Module 2B invers verschoben. Gemäß dem in der Figur 1 dargestellten Beispiel wird die invers modifizierte Prüfsumme Pi wie folgt ermittelt: Pi = P-1-1. Die invers modifizierte Prüfsumme Pi wird mit der aus den betreffenden Daten D ermittelten Prüfsumme P verglichen. Bei Übereinstimmung von Pi und P ist ein Nachweis dafür gegeben, dass die vorgegebenen und erforderlichen Programme, insbesondere die Prüfprogramme 6 der nicht sicheren Software-Module 2A, aktiv sind, wodurch eine ordnungsgemäße Funktionsweise von in sichere Software eingebetteten nicht sicheren Software, z.B. firm-ware, dargestellt wird.

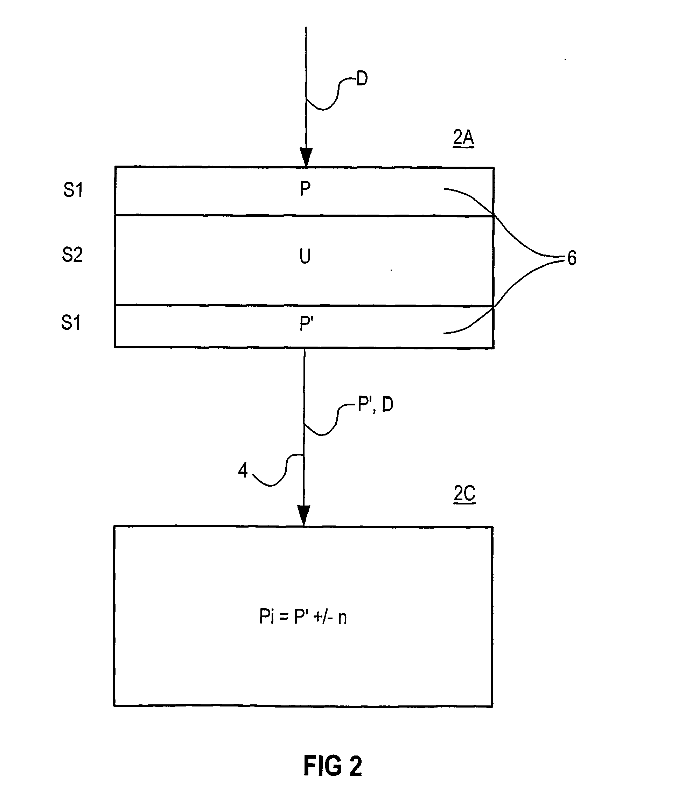

Das durch die ausgewählten Software-Module 2B gebildete, die Software-Module 2A umschließende Prüfprogramm 6 zur Bildung der modifizierten Prüfsumme P' ist in Figur 2 schematisch dargestellt. Bevorzugt ist das Prüfprogramm nur für die Überwachung der nicht sicheren Software-Module 2A, wie in Figur 1 dargestellt, vorgesehen. Mittels des Prüfprogramms 6 wird dabei sowohl eine den Programmablauf des zugehörigen Software-Moduls 2A charakterisierende Programmlaufzeit überwacht als auch die Modifizierung der Prüfsumme P ausgeführt.

Zur Prüfung des Programmablaufs und somit der Datenverarbeitung sowie der Aktivität des Prüfprogramms 6 wird in einem ersten Schritt S1 eingangsseitig die den Daten D zugeordnete Prüfsumme P bei ordnungsgemäßer Datenverarbeitung in diesem Software-Modul 2B, wie beschrieben, modifiziert. Je nach Art und Ausführung wird zusätzlich die Empfangszeit der Daten D gespeichert. Anschließend wird in einem zweiten Schritt S2 die von dem Prüfprogramm 6 umschlossene Software U des Software-Moduls 2A bearbeitet. Nach Programmablauf wird in einem dritten Schritt S3 anhand der gespeicherten Empfangszeit und der aktuellen Zeit eine Programmlaufzeit für das verarbeitende Programm bzw. die Software U ermittelt und mit einem vorgegebenen Wert verglichen. Hierdurch ist ein besonders einfacher Nachweis für die Einhaltung der erwarteten Programmlaufzeit gegeben. Bei Überschreiten der Programmlaufzeit kann auf einen Fehler in der Datenverarbeitung - im Programmablauf - geschlossen werden. Falls ein derartiger Fehler nicht erkannt und auch ansonsten eine ordnungsgemäße Weiterverarbeitung der Daten D im nachfolgenden Software-Modul 2B festgestellt wird, wird dort die Prüfsumme P erneut um eine Stellen n=1 verschoben. Die daraus resultierende modifizierte Prüfsumme P' wird an ein weiteres mit diesem Software-Modul 2A kommunizierendes Software-Modul 2A bzw. 2B, insbesondere ein sicheres Software-Modul 2B, gesendet.

Zur Prüfung der Datenübertragung und der Datenverarbeitung des nicht sicheren Software-Moduls 2A wird in einem die modifizierte Prüfsumme P' über den logischen Kanal 4 empfangenden sicheren Software-Modul 2C die modifizierte Prüfsumme P' invers bearbeitet. Die modifizierte Prüfsumme P' wird dabei um die genannte Anzahl von Stellen n verschoben, die der Anzahl der insgesamt in der Datenverarbeitungseinheit 1 vorangegangenen, auf Aktivität hin zu überwachenden ausgewählten Software-Modulen 2B und somit den aktiven Prüfprogrammen 6 entspricht. Alternativ kann vorgesehen sein, dass jedem ausgewählten Software-Modul 2B individualisiert eine Anzahl von Stellen n zugeordnet ist, um die die Prüfsumme P beim ordnungsgemäßen Durchlauf der Daten D durch dieses Software-Modul 2B verschoben wird. Beispielsweise wird die Prüfsumme P in einem bestimmten Software-Modul 2B um zwei Stellen (statt wie bisher um 1 Stelle) rotiert. In Summe erfolgt dann eine Rotation um 3 (statt 2) Stellen. Beim endgültigen Vergleich der Prüfsumme P ist dann erkennbar, ob tatsächlich alle Prüfprogramme 6 oder Fail-Safe-Programme gemäß dem ihnen zugeschriebenen Beitrag aktiv waren. Ist dies nicht der Fall, so ist über eine quantitative Auswertung erkennbar, welches ausgewählte Software-Modul 2B nicht aktiv war.

Bevorzugt wird bei Erstinitialisierung die Prüfsumme P um eine Stelle n verschoben. Hierdurch ist im Gegensatz zum Fall, wenn nämlich jedes Prüfprogramm 6 lediglich um eine Stelle n rotiert, eine Unterscheidung derart möglich, dass derjenige Zustand identifiziert wird, der sich einstellt, wenn beispielsweise das erste Prüfprogramm 6 um zwei Stellen rotiert - also zweimal aktiv wird -, das zweite Prüfprogramm 6 aber gar nicht.

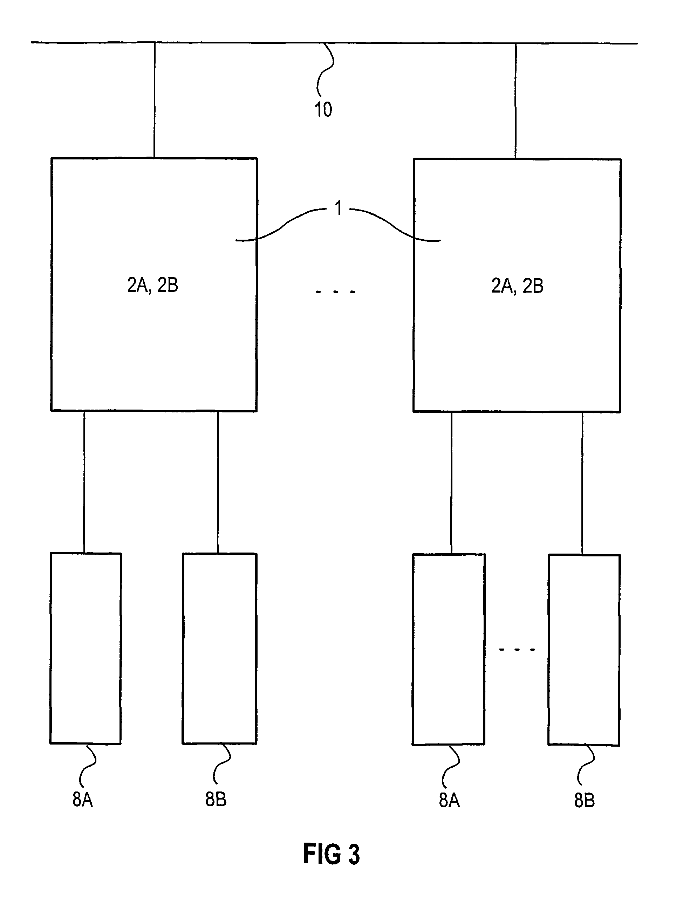

In Figur 3 ist ein mehrere Datenverarbeitungseinheiten 1 umfassendes Computersystem dargestellt. Zwischen den Datenverarbeitungseinheiten 1 und deren jeweils zugehörigen Software-Modulen 2A, 2B und/oder Baugruppen 8A, 8B werden mittels einer Datenübertragungseinheit 10, z.B. ein Bussystem, Daten D ausgetauscht. Die Baugruppen 8A stellen dabei nicht sichere Baugruppen dar, z.B. Speicherbaugruppen, die nach der Inbetriebnahme des Computersystems ausgetauscht bzw. ergänzt worden sind. Die Baugruppen 8B sind sichere Baugruppen, die im Computersystem gemäß vorgegebenen Sicherheitsanforderungen geprüft worden sind, wie beispielsweise Ein- oder AusgabeBaugruppen.

Die modifizierte Prüfsumme P' wird bevorzugt in der sendenden Datenverarbeitungseinheit 1 gebildet. Demgegenüber erfolgt die Bildung der invers modifizierten Prüfsumme Pi und deren Vergleich mit der aus den empfangenen Daten D gebildeten Prüfsumme P in der empfangenen Datenverarbeitungseinheit 1. Je nach Art und Weise kann die jeweilige Datenverarbeitungseinheit 1 ein alle Software-Module 2A, 2B umgebendes Prüfprogramm 6 zur Bildung der modifizierten Prüfsumme P' aufweisen. Alternativ oder zusätzlich können einzelne Software-Module 2A, 2B bzw. eine Gruppe von Software-Modulen 2A, die je nach Vorgabe zusammengefaßt sind, von einem zugehörigen Prüfprogramm 6 zur Bildung der modifizierten Prüfsumme P' umgeben sein. Die invers modifizierte Prüfsumme Pi wird bevorzugt in einer sicheren Baugruppe 8B oder in einem sicheren Software-Modul 2B ermittelt. Die Bildung der modifizierten Prüfsumme P und/oder der invers modifizierten Prüfsumme Pi erfolgt dabei in wie oben beschriebenen Art und Weise.
Je nach Art und Ausführung des Computersystems kann es sich bei dem Datenaustausch im wesentlichen um einen Querverkehr bei der Kommunikation in einer Hierarchieebene oder um eine Kommunikation in mehreren Hierarchieebenen in vertikaler Richtung handeln. Bei der Datenkommunikation mittels der Datenübertragungseinheit 8 oder des Bussystems wird insbesondere berücksichtigt, dass im Bussystem die unveränderte Prüfsumme P vorliegt. Hierdurch ist gewährleistet, dass für Fremdgeräte, wie z.B. Scanner, Drucker, andere Computernetze, etc. die oben beschriebene Modifizierung nicht sichtbar ist, so dass keine Belastung des übrigen Datenverkehrs erfolgt.

Je nach Komplexität der einzelnen Datenverarbeitungseinheit 1 bzw. des Computersystems kann die Art der Modifikation der Prüfsumme P erweitert werden durch n-fache Operationen, z.B. bei einem über n-Instanzen auszuführenden Datenaustausch wird in der sendenden Datenverarbeitungseinheit 1 die Operation n-fach ausgeführt, jede Instanz (=empfangende Datenverarbeitungseinheit 1) führt zur Weiterleitung die inverse Operation einmal aus. Beispielsweise wird als n-fache Operation die Prüfsumme P n-fach potenziert.

Durch die oben beschriebene reversible Veränderung einer Sicherungsinformation - der Prüfsumme P - zum Online-Nachweis von der Aktivität oder Verfügbarkeit von ausgewählten Software-Modulen 2B mittels des Prüfprogramms 6 ist gewährleistet, dass Softwareänderungen oder Baugruppenänderungen in der Datenverarbeitungseinheit 1 auf ihre aktive Verfügbarkeit im Hinblick auf Datenverarbeitung und/oder -übertragung geprüft und überwacht werden, indem nicht sichere Software-Module 2A bzw. Baugruppen 8A in sichere Programmabschnitte integriert werden.

## Patentansprüche

1. Verfahren zur Überwachung der Datenverarbeitung und -übertragung in einer Datenverarbeitungseinheit (1) mit einer Mehrzahl von Software-Modulen (2A, 2B), zwischen denen Daten (D) ausgetauscht werden, wobei den einer Datenübertragung zugrundeliegenden Daten (D) eine Prüfsumme (P) zugeordnet wird, die in ausgewählten Software-Modulen (2B) nur im Falle eines ordnungsgemäßen Durchlaufs der Daten (D) durch eines dieser Software-Module (2B) in einer für dieses Software-Modul (2B) spezifischen Weise reversibel modifiziert wird, wobei empfangsseitig anhand der empfangenen Daten (D) die Prüfsumme (P) bestimmt und die empfangene modifizierte Prüfsumme (P') entsprechend der Anzahl der sendeseitig erwarteten aktiven Software-Module (2A, 2B) invers modifiziert wird, und wobei eine daraus.resultierende invers modifizierte Prüfsumme (Pi) mit der aus den empfangenen Daten (D) ermittelten Prüfsumme (P) verglichen wird.

2. Verfahren nach Anspruch 1, bei dem die Prüfsumme (P) für eine reversible Modifikation um eine Anzahl von Stellen (n) verschoben wird.

3. Verfahren nach einem der Ansprüche 1 oder 2, bei dem die Daten (D) zwischen Software-Modulen (2A, 2B) verschiedener Datenverarbeitungseinheiten (1) ausgetauscht werden, wobei die modifizierte Prüfsumme (P') in der sendenden Datenverarbeitungseinheit (1) und die invers modifizierte Prüfsumme (Pi) in der empfangenden Datenverarbeitungseinheit (1) gebildet werden.

4. Verfahren nach einem der Ansprüche 1 bis 3, bei dem die modifizierte Prüfsumme (P') und/oder die invers modifizierte Prüfsumme (Pi) mittels eines Prüfprogrammes (6) der betreffenden Datenverarbeitungseinheit (1) und/oder des betreffenden Software-Moduls (2A, 2B) gebildet wird.

5. Verfahren nach einem der Ansprüche 1 bis 4, bei dem für die Datenübertragung eine Laufzeit ermittelt und mit einem vorgegebenen Wert verglichen wird.

6. Vorrichtung zur Überwachung der Datenverarbeitung und -übertragung in einer Datenverarbeitungseinheit (1) umfassend eine Anzahl von Software-Modulen (2A, 2B) und eine Mehrzahl von logischen Kanälen (4) zum Datenaustausch zwischen den Software-Modulen (2A, 2B), wobei eine Anzahl von ausgewählten Software-Modulen (2B) zur reversiblen Modifikation einer zu übertragenden Daten (D) zugeordneten Prüfsumme (P) ausschließlich für den Fall eines ordnungsgemäßen Durchlaufs der Daten (D) durch das jeweilige Software-Modul (2B) ausgebildet ist, und wobei ein Daten empfangendes Software-Modul (2C) vorgesehen ist, das so beschaffen ist, dass empfangsseitig anhand der empfangenen Daten (D) die Prüfsumme (P) bestimmt und die empfangene modifizierte Prüfsumme (P') entsprechend der Anzahl der sendeseitig erwarteten aktiven Software-Module (2A, 2B) invers modifiziert wird, und wobei eine daraus resultierende invers modifizierte Prüfsumme (Pi) mit der aus den empfangenen Daten (D) ermittelten Prüfsumme (P) verglichen wird.

## Claims

1. Method for monitoring the data processing and transmission in a data processing unit (1) having two or more software modules (2A, 2B) between which data (D) are interchanged, with the data (D) on which the data transmission is based having an associated checksum (P) which, only for the situation where the data (D) pass correctly through one of selected software modules (2B), is reversibly modified in a manner specific to this software module (2B), the checksum (P) being determined at the receiving end on the basis of the received data (D), and the received modified checksum (P') is modified inversely in accordance with the number of active software modules (2A, 2B) expected at the transmission end, and with an inverse modified checksum (Pi), which results from this, being compared with the checksum (P) determined from the received data (D).

2. Method according to Claim 1, in which the checksum (P) for a reversible modification is shifted by a number of digits (n) .

3. Method according to either of Claims 1 or 2, in which the data (D) are interchanged between software modules (2A, 2B) in the various data processing units (1), with the modified checksum (P') being formed in the transmitting data processing unit (1), and the inverse modified checksum (Pi) being formed in the receiving data processing unit (1).

4. Method according to one of Claims 1 to 3, in which the modified checksum (P') and/or the inverse modified checksum (Pi) are/is formed by means of a test program (6) in the relevant data processing unit (1) and/or the relevant software module (2A, 2B).

5. Method according to one of Claims 1 to 4, in which a runtime is determined for the data transmission, and is compared with a predetermined value.

6. Apparatus for monitoring the data processing and data transmission in a data processing unit (1) comprising a number of software modules (2A, 2B) and two or more logical channels (4) for interchanging data between the software modules (2A, 2B), with a number of selected software modules (2B) being formed for the reversible modification of a checksum (P), which is associated with the data (D) to be transmitted, solely for the situation where the data (D) pass correctly through each software module (2B) and a software module (2C) being provided to receive data, which software module is designed such that the checksum (P) is determined at the receiving end on the basis of the received data (D), and the received modified checksum (P') is modified inversely in accordance to the number of active software modules (2A, 2B) expected at the transmission end, and with an inverse modified checksum (P1), which results from this, being compared with the checksum (P) determined from the received data (D).

## Revendications

1. Procédé de contrôle du traitement de données et de la transmission de données dans une unité ( 1 ) de traitement de données, comprenant une pluralité de modules ( 2A, 2B ) de logiciel entre lesquels des données ( D ) sont échangées, dans lequel on affecte aux données ( D ), à la base d'une transmission de données, une somme ( P ) de contrôle qui est modifiée de manière réversible dans des modules ( 2B ) de logiciel sélectionnés, seulement dans le cas d'un passage correct des données ( D ) dans l'un de ces modules ( 2B ) de logiciel, la modification étant effectuée d'une façon spécifique pour ce module ( 2B ) de logiciel, dans lequel on détermine la somme ( P ) de contrôle du côté de la réception au moyen des données ( D ) reçues et on modifie, de façon inverse, la somme ( P' ) de contrôle modifiée reçue conformément au nombre des modules ( 2A, 2B ) de logiciel actifs auxquels on s'attend du côté de l'émission, et dans lequel on compare une somme ( Pi ) de contrôle modifiée, de façon inverse, qui en résulte à la somme ( P ) de contrôle déterminée à partir des données ( D ) reçues.

2. Procédé suivant la revendication 1, dans lequel on décale la somme ( P ) de contrôle d'un nombre de positions ( n ) pour une modification réversible.

3. Procédé suivant l'une des revendications 1 ou 2, dans lequel on échange les données ( D ) entre des modules ( 2A, 2B ) de logiciel d'unités ( 1 ) de traitement de données différentes, la somme ( P' ) de contrôle modifiée étant formée dans l'unité ( 1 ) de traitement de données émettrice et la somme ( Pi ) de contrôle modifiée de façon inverse étant formée dans l'unité ( 1 ) de traitement de données réceptrice.

4. Procédé suivant l'une des revendications 1 à 3, dans lequel on forme la somme ( P' ) de contrôle modifiée et/ou la somme ( Pi ) de contrôle modifiée de façon inverse au moyen d'un programme ( 6 ) de contrôle de l'unité ( 1 ) de traitement de données concernée et/ou du module ( 2A, 2B ) de logiciel concerné.

5. Procédé suivant l'une des revendications 1 à 4, dans lequel on détermine un temps de passage pour la transmission de données et on le compare à une valeur prescrite.

6. Dispositif de contrôle du traitement de données et de la transmission de données dans une unité ( 1 ) de traitement de données comprenant un certain nombre de modules ( 2A, 2B ) de logiciel et une pluralité de canaux ( 4 ) logiques pour l'échange de données entre les modules ( 2A, 2B ) de logiciel, un certain nombre de modules ( 2B ) de logiciel sélectionnés étant formés pour la modification réversible d'une somme ( P ) de contrôle affectée aux données ( D ) à transmettre, dans le cas d'un passage correct des données ( D ) dans le module ( 2B ) de logiciel respectif, et un module ( 2C ) de logiciel recevant des données étant prévu et étant tel que, du côté de la réception, la somme ( P ) de contrôle est déterminée au moyen de données ( D ) reçues et la somme ( P' ) de contrôle reçue modifiée est modifiée de façon inverse conformément au nombre des modules ( 2A, 2B ) de logiciel actifs auxquels on s'attend du côté de l'émission, et dans lequel une somme ( Pi ) de contrôle modifiée de façon inverse qui en résulte est comparée à la somme ( P ) de contrôle déterminée à partir des données ( D ) reçues.
